# EUROPEAN PATENT APPLICATION

(11) **EP 2 200 223 A1**
(43) Date of publication of application: **23.06.2010**
(21) Application number: 07807140.4
(22) Date of filing: 12.09.2007
(51) Int. Cl.: H04L 12/28

(54) **WIRELESS TERMINAL DEVICE, WIRELESS CONNECTION METHOD, AND PROGRAM**

(71) Applicant: Panasonic Corporation, Kadoma-shi Osaka 571-8501 (JP)
(72) Inventor: IINO, Satoshi, Osaka 540-6207 (JP); GOMYO, Kazumasa, Osaka 540-6207 (JP); ISHIHARA, Tomohiro, Osaka 540-6207 (JP); HASHIMOTO, Yuji, Osaka 540-6207 (JP)
(74) Representative: Grünecker, Kinkeldey, Stockmair & Schwanhäusser Anwaltssozietät
(86) International application number: PCT/JP2007/067733
(87) International publication number: WO 2009/034624

(57) **Abstract**

A wireless terminal device which can be connected to a wireless LAN service to which the terminal can be connected without regard to the identifier for specifying a wireless LAN service, a wireless connection method, and a program are provided. A wireless terminal device (100) stores common authentication information (200) that can be verified by a plurality of access points (111 to 113) in common in a common authentication information DB (104) in advance. Before connecting to the wireless LAN, the wireless terminal device repeats a trial in order to be authenticated with respect to the connectable wireless LAN service according to the common authentication information (200) until the connection is made.

## Description

### Technical Field

The present invention relates to a wireless terminal apparatus that connects to a wireless LAN service without being aware of an ESSID (Extended Service Set Identifier), a wireless connection method, and a program.

### Background Art

When a wireless terminal apparatus attempts to execute data communication with another wireless terminal apparatus via an Access Point, with an IEEE (Institute of Electrical and Electronic Engineers) 802.11 standard wireless communication method, for example, it is stipulated that a pre-established procedure called an association is to be performed between the access point and wireless terminal apparatus, and the access point is to be made to recognize the presence of the wireless terminal apparatus. An identifier called an ESSID is used to identify an access point for which this association is performed. When a wireless terminal apparatus user selects an access point for which it is wished to perform association, it is necessary for the same ESSID to be set in advance in both the access point and the wireless terminal apparatus. By setting the same ESSID for a plurality of access points, it is possible for a wireless terminal apparatus to perform "roaming" whereby access point connection is not cut even if the wireless terminal apparatus moves around freely.

Patent Document 1 describes a wireless communication system whereby, by reporting a radio channel connection request requesting connection of a wireless base station present at a movement destination to a setting information management apparatus via a setting wireless communication network, a terminal operator can receive a wireless communication service without being aware of hot spot changes due to movement.

Patent Document 2 describes a network system whereby, in response to a connection request from a wireless terminal apparatus for which user identification information has not been registered, an inquiry as to whether or not user identification information of the wireless terminal apparatus making that connection request has been registered is made to another access point, and an access point is specified for the wireless terminal apparatus based on the result.

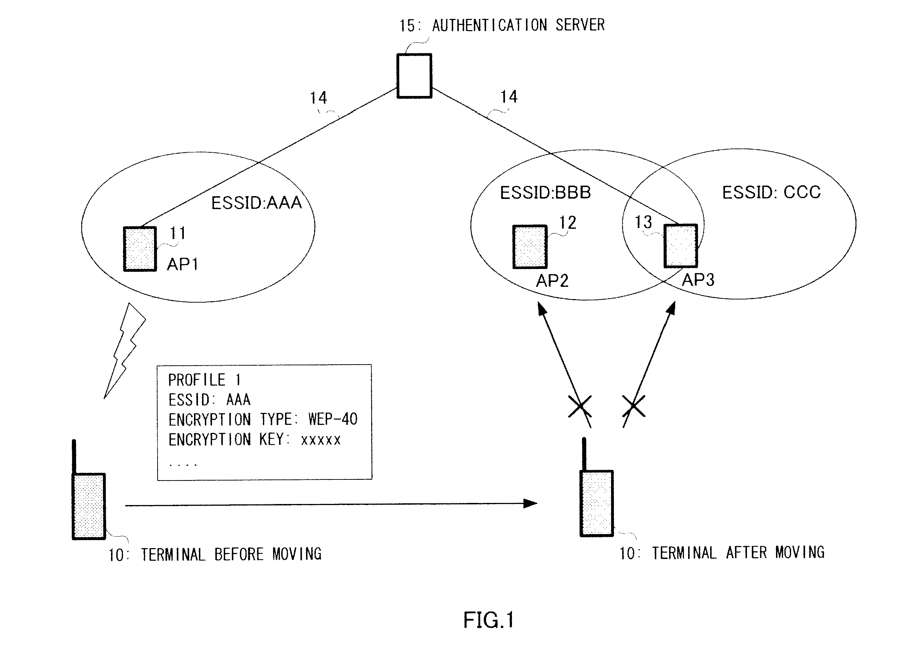

FIG. 1 is a drawing showing the overall configuration of a conventional wireless communication system.

The wireless communication system in FIG.1 comprises wireless terminal apparatus 10, plurality of access points 11 through 13 (AP1 through AP3), wired LAN 14, and authentication server 15.

Wireless terminal apparatus 10 is a PHS (Personal Handy-Phone System)/mobile phone, PDA (Personal Digital Assistant), or suchlike portable terminal apparatus provided with a wireless communication function, and performs wireless communication through connection to any of access points 11 through 13 (AP1 through AP3). Wireless terminal apparatus 10 has a wireless LAN function, receives Beacons from access points 11 through 13 (AP1 through AP3) in the vicinity, and acquires the network name, communication device communication speed, security strength, communication channel, and radio field intensity of access points 11 through 13 (AP1 through AP3). FIG.1 shows a state in which wireless terminal apparatus 10 attempts to connect to access point 12 (AP2) or access point 13 (AP3) after moving.

Access points 11 through 13 (AP1 through AP3) are wireless relay apparatuses that connect wireless terminal apparatus 10 configuring a wireless LAN to wired LAN 14. In order for wireless terminal apparatus 10 to connect to a wireless LAN service, it is necessary for the terminal to store in advance connection profile information including a wireless LAN service identifier (ESSID). For example, access point 11 (AP1) has "Profile 1" as connection profile information. "Profile 1" comprises ESSID: AAA, encryption type: WEP (Wired Equivalent Privacy) -40, encryption key: xxxxx, ..., and also includes the radio field intensity, communication standard, channel, encryption, and so forth. Similarly, access point 12 (AP2) has "Profile 2" (ESSID: BBB, ...) as connection profile information, and access point 13 (AP3) has "Profile 3" (ESSID: CCC, ...).

When wireless terminal apparatus 10 accesses wired LAN 14 via access points 11 through 13 (AP1 through AP3), authentication server 15 performs authentication to confirm whether or not access is possible for wireless terminal apparatus 1 0.

In the above configuration, in order to connect to a wireless LAN service, w ireless terminal apparatus 10 stores "Profile 1" including the ESSID of access point 11 (AP1) in advance, by means of a user setting or the like. Wireless terminal apparatus 10 connects to access point 11 (AP1) by means of "Profile 1" it holds, and can access authentication server 15 via access point 11 (AP1) and wired LAN 14. When authentication is established by authentication server 15, wireless terminal apparatus 10 becomes connectable to numerous devices on wired LAN 14 via access point 11 (AP1). When wireless terminal apparatus 10 moves away from access point 11 (AP1) toward access points 12 (AP2) and 13 (AP3), after moving, wireless terminal apparatus 10 cannot connect to access points 12 (AP2) and 13 (AP3) as it does not hold "Profiles 2 and 3" of access points 12 (AP2) and 13 (AP3). Connection is not possible by means of "Profile 1" of access point 11 (AP1). In order for wireless terminal apparatus 10 to connect to a wireless LAN service, it is necessary to set "Profiles 2 and 3" of access points 12 (AP2) and 13 (AP3) in advance.
Patent Document 1: Japanese Patent Application Laid-Open No.2004-72564
Patent Document 2: Japanese Patent Application Laid-Open No.2004-282321

### Disclosure of Invention

### Problems to be Solved by the Invention

In order for a wireless LAN terminal to connect to a wireless LAN service in a wireless communication system of this kind, it is necessary for the wireless LAN terminal to newly store in advance connection profile information including a wireless LAN service identifier (ESSID). Consequently, it is necessary for a user to set in advance an ESSID of a wireless LAN to be connected to. Such a user setting involves the following issues.

(1) Although it is possible to acquire an ESSID of an access point in the vicinity (hereinafter referred to as an "appropriate AP") by searching for a wireless LAN service in the vicinity, a user must determine whether or not that ESSID is connectable.

(2) For the same reason, it is necessary to be aware of an ESSID at all times in order to use a wireless LAN service.

In addition to the above issues, there is also the following problem.

(3) Wireless LAN services have expanded in terms of coverage, and a plurality of carriers have developed services. At the same time, roaming services allowing reciprocal service access have also expanded. In these circumstances, it has become cumbersome and complicated to make an advance setting of which wireless LAN service is to be connected to. Also, it is possible to choose a listed wireless LAN service by scanning available wireless LAN services on the spot without making an advance setting. In this case, also, it is necessary to remember which wireless LAN services are available, and having those services managed by a user places a heavy burden on the user.

Furthermore, the wireless communication systems of Patent Document 1 and Patent Document 2 involve the following issues.

An apparatus described in Patent Document 1 enables settings to be made unnecessary in the case of wireless LAN roaming, but requires the construction of a new wireless communication network. In terms of actual operation, providing a new wireless communication network is extremely disadvantageous from the standpoint of network maintenance costs.

An apparatus described in Patent Document 2 requires a terminal database to be stored at an access point, and cannot be supported by an existing AP. Also, when the number of terminals becomes enormous in a large-scale network system, it is necessary for data of many terminals to be stored at one access point, incurring a heavy cost burden.

The present invention has been implemented taking into account the problems described above, and it is an object of the present invention to provide a wireless terminal apparatus, wireless connection method, and program that enable a terminal to be connected to a wireless LAN service to which the terminal can be connected without the necessity of being aware of an identifier for identifying a wireless LAN service.

### Means for Solving the Problem

A wireless terminal apparatus of the present invention employs a configuration having: a wireless communication section that performs wireless communication with a plurality of access points connected to a network; a common authentication information storage section that stores common authentication information that can be authenticated by the plurality of access points in common; a search section that performs a search of the access points b y means of the wireless communication apparatus; and an authentication trial section that performs an authentication trial vis-à-vis a connectable access point based on a search result of the search section and the common authentication information.

A wireless connection method of the present invention has: a step of performing wireless communication with a plurality of access points connected to a network; a step of storing common authentication information that can be authenticated by the plurality of access points in common; a step of performing a search of the access points by means of the wireless communication; a step of temporarily storing service identification information of the searched connectable access points as profile information; and a step of performing an authentication trial vis-à-vis a connectable access point based on the profile information and the common authentication information.

From another viewpoint, the present invention is a program for causing a computer to execute the steps of the above-described wireless connection method.

### Advantageous Effects of Invention

According to the present invention, by storing in advance common authentication information that can be authenticated by a plurality of access points in common, and, when connecting to a wireless LAN, repeatedly performing an authentication trial vis-à-vis a connectable wireless LAN service based on the common authentication information until connection is possible, the necessity for a terminal to recognize which access point it is necessary to be connected to in advance is eliminated, enabling connection to a wireless LAN service without being aware of an identifier (such as an ESSID) for identifying a wireless LAN service.

In this way, release is provided from the cumbersome and complicated process of managing and setting an ESSID or suchlike access point identifier when different carriers provide services using the same authentication information as roaming services continue to expand.

Also, since there are no changes to existing access point settings, there is no need for the provision of new access points or the like, and the present invention can easily be implemented without incurring a cost burden.

### Brief Description of Drawings

FIG.1 is a drawing showing the overall configuration of a conventional wireless communication system;
FIG.2 is a function block diagram showing the configuration of a wireless terminal apparatus according to an embodiment of the present invention;
FIG.3 is a drawing showing an example of common authentication information stored in a common authentication information DB of a wireless terminal apparatus according to this embodiment;
FIG.4 is a drawing showing an example of temporary profile information temporarily stored in a temporary profile DB of a wireless terminal apparatus according to this embodiment;
FIG.5 is a flowchart showing connection management processing performed by a connection management section of a wireless terminal apparatus according to this embodiment;
FIG.6 is a flowchart showing wireless LAN service search processing performed by a service search section of a wireless terminal apparatus according to this embodiment;
FIG.7 is a flowchart showing authentication trial processing performed by an authentication trial section of a wireless terminal apparatus according to this embodiment;
FIG.8 is a drawing showing the overall configuration of a wireless communication system having a wireless terminal apparatus according to this embodiment; and
FIG.9 is a drawing showing an application example of a wireless communication system having a wireless terminal apparatus according to this embodiment.

### Best Mode for Carrying Out the Invention

Now, an embodiment of the present invention will be described in detail with reference to the accompanying drawings.

### (Embodiment)

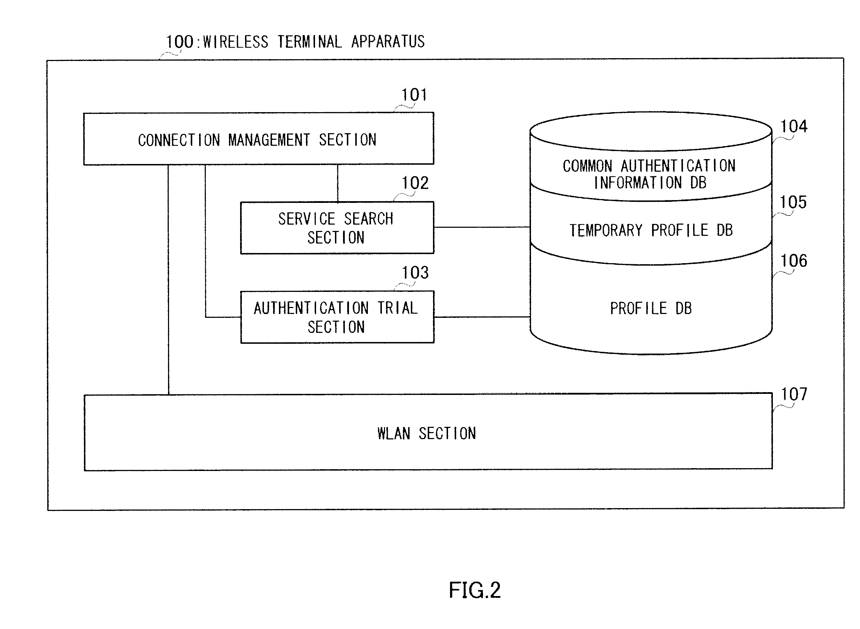

FIG.2 is a function block diagram showing the configuration of a wireless terminal apparatus according to an embodiment of the present invention. This embodiment is an example in which a PHS (Personal Handy-Phone System)/mobile phone, PDA (Personal Digital Assistant), or suchlike portable terminal apparatus is applied as a wireless LAN terminal configuring a wireless LAN system.

In FIG.2, wireless terminal apparatus 100 comprises connection management section 101, service search section 102, authentication trial section 103, common authentication information database (DB) 104, temporary profile database (DB) 105, profile database (DB) 106, and WLAN section 107.

Connection management section 101 is a block that performs wireless LAN connection management, managing service search section 102, authentication trial section 103, and WLAN section 107.

Service search section 102 performs wireless LAN service searching (scanning), and writes a connectable wireless LAN service to temporary profile DB 105.

Authentication trial section 103 performs authentication trial processing based on temporary profile information and common authentication information. Specifically, authentication trial section 103 tries authentication using common authentication information vis-à-vis a wireless LAN service in temporary profile information.

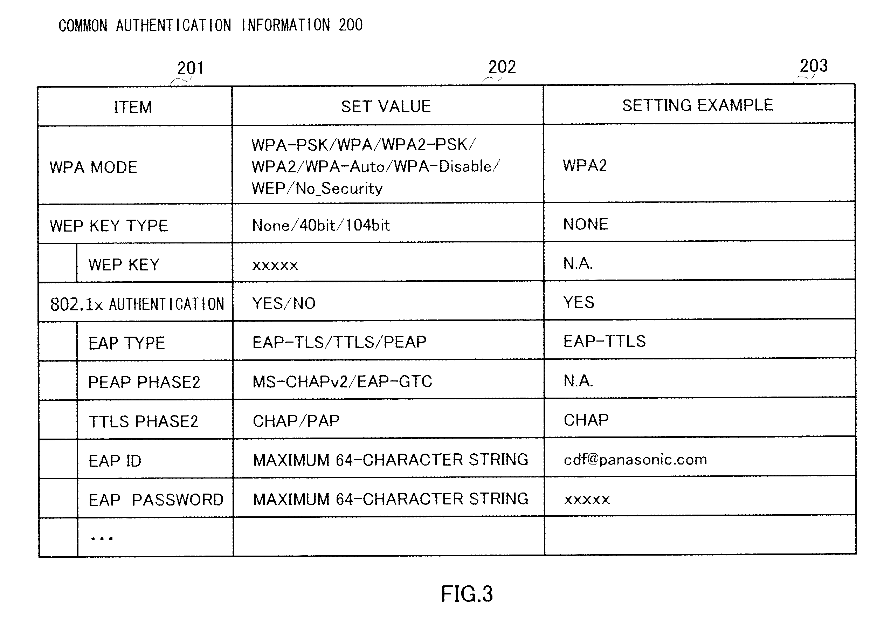

Common authentication information DB 104 stores common authentication information that is set in advance by a user or the like, and is used in common by a plurality of access points. Common authentication information is already set in common authentication information DB 104 when service is first started. In this embodiment, authentication/security information is stored independently of an ESSID, and authentication information used in respective connections is managed separately as common authentication information. A feature of this embodiment is that wireless terminal apparatus 100 is equipped with common authentication information DB 104 holding common authentication information separately. Details of common authentication information s tored in common authentication information DB 104 will be given later herein with reference to FIG.3.

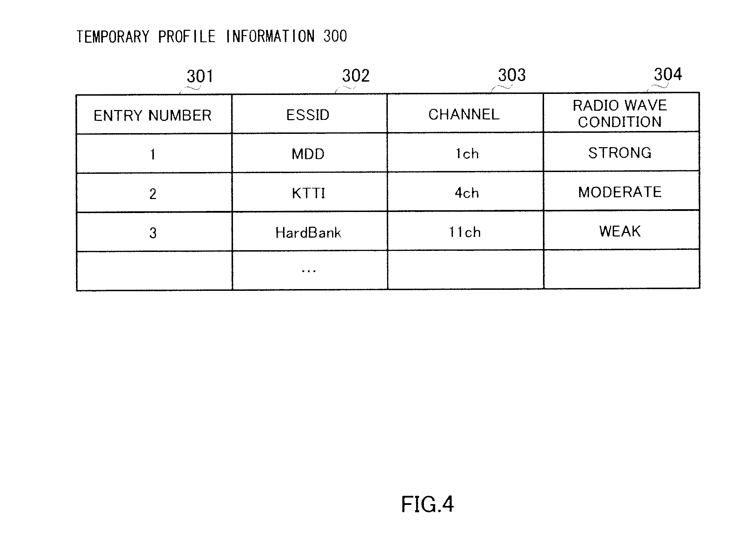

Temporary profile DB 105 temporarily stores wireless LAN service information discovered by service search section 102 as temporary profile information. Details of temporary profile DB 105 will be given later herein with reference to FIG.4.

Profile DB 106 stores wireless LAN service information for which connection has finally ended.

WLAN section 107 is equipped with an interface that performs wireless LAN input/output, and performs wireless connection to an access point (AP) via an antenna (not shown). In this embodiment, WLAN section 107 performs wireless communication by means of a WLAN based on the IEEE802.11x standard. WLANs are widely used by portable notebook PCs, PDAs, and suchlike portable information terminals equipped with a wireless LAN function. A low-power, short-range bidirectional wireless communication method such as B luetooth or UWB (Ultra Wideband) that allows lower power consumption to be achieved may also be used instead of a wireless LAN. Wireless communication terminals whose place of use can be moved, such as FWA (Fixed Wireless Access) terminals, are also included.

Above-described connection management section 101, service search section 102, and authentication trial section 103 are configured from a control section that controls the overall apparatus. The above-described control section actually comprises a CPU that performs overall apparatus control, connection management processing, and the like, ROM and RAM that store various kinds of processing programs, EEPROM (electrically erasable programmable ROM), which is electrically rewritable nonvolatile memory, and so forth, and information processing is executed by the CPU that performs overall apparatus control. Also, terminal-specific terminal information such as the terminal number and name is stored in nonvolatile memory.

Above-described common authentication information DB 104, temporary profile DB 105, and profile DB 106 are configured from nonvolatile memory such as EEPROM, or a fixed disk such as a hard disk drive (HDD). Alternatives to an HDD or suchlike disk apparatus include an SRAM (Static RAM) card holding information written by means of power supply backup, and an SD card (registered trademark) comprising flash memory that does not require power supply backup, for example.

In this embodiment, it is assumed that a wireless LAN service uses a communication method conforming to a method standardized by the IEEE802 Committee. Methods standardized by the IEEE802 Committee include, for example, the IEEE802.11 standard method, IEEE802.11a standard method, IEEE802.11b standard method, and IEEE802.11g standard method. Below, these are referred to generically as IEEE802.1x.

FIG.3 is a drawing showing an example of common authentication information 200 stored in a common authentication information DB 104.

In this embodiment, wireless LAN settings originally bundled together as wireless LAN settings are divided into service identification elements and authentication/security elements, with authentication/security information being managed separately as common authentication information 200. This common authentication information 200 is common authentication information used in common by a plurality of access points (APs), and is set in common authentication information DB 104 in advance by a user or the like when a service is first started.

In FIG.3, common authentication information 200 has items 201 describe below, and set value 202 and setting example 203 for each item 201. Items 201 are "WPA (Wi-Fi Protected Access) mode", "WEP key type", and "802.1x authentication", and "WEP key type" has a WEP key. "802.1x authentication" includes EAP (Extensible Authentication Protocol) type, PEAP Phase2, TTLS (Transport Layer Security) Phase2, EAP ID, and EAP password.

"WPA mode" has WPA-PSK/WPA/WPA2-PSK/WPA2/WPA-Auto/WPA-Disable/WEP/No_Security as set values. A setting example is WPA2, for instance.

"WEP key type" options are None/40bit/104bit. A setting example is None, for instance. WEP key is xxxxx, and is N.A. (not set), for example.

"802.1x authentication" set values are Yes/No. EAP types are EAP-TLS/TTLS/PEAP, with EAP-TTLS being set, for example. PEAP Phase2 options are MS-CHAPv2/EAP-GTC, with N.A. being set, for example. TTLS Phase2 options are CHAP (Challenge Handshake Authentication Protocol)/PAP (Password Authentication Protocol), with CHAP being set, for example. EAP ID is a maximum 64-character string, with cdf@panasonic.com being set, for example. EAP password is a maximum 64-character string, with xxxxx being set, for example.

As can be seen from items 201 above, common authentication information 200 is authentication/security information separated from service identification elements, and can be used i n common as a common profile of each access point (AP). That is to say, when performing a wireless LAN connection trial, wireless terminal apparatus 100 can connect to an appropriate access point (AP) by repeatedly performing authentication trials vis-à-vis a connectable wireless LAN service based on common authentication information 200 until connection is possible.

Above-described common authentication information 200 is not limited to IEEE802.1x authentication information, and may also be WEB authentication information.

FIG.4 is a drawing showing an example of temporary profile information 300 temporarily stored in temporary profile DB 105.

In FIG.4, temporary profile information 300 holds entry number 301, ESSID 302, channel 303, and radio wave condition 304. An example is shown in which the entry number 1 ESSID is MDD (operator), channel is 1ch (channel 1), and radio wave condition is weak; the entry number 2 ESSID is KTTI (operator), channel is 4ch (channel 4), and radio wave condition is moderate; and the entry number 3 ESSID is HardBank (operator), channel is 11ch (channel 11), and radio wave condition is strong.

A wireless LAN connection operation of wireless terminal apparatus 100 with the above configuration will now be described.

First, the basic concept of the present invention will be explained.

Wireless LAN settings are divided into types (1) and (2) below.

(1) Service identification
   · ESSID, etc.
(2) Authentication/security
   · Key used by WEP, TKIP, WPA-PSK
   · 802.1x+EAP ID, password, certification information
   The above wireless LAN settings were originally parameters bundled in a wireless LAN service. However, in a mode such as roaming mode in which authentication/security can be used by a plurality of wireless LAN services, this management method is inefficient.

The present inventors considered that wireless LAN settings originally bundled together as wireless LAN settings should be divided into service identification elements and authentication/security elements, with authentication/security information being managed separately as common authentication information, and that, in a wireless LAN connection trial, an authentication trial should be performed vis-à-vis a connectable wireless LAN service based on the common authentication information.

Thus, authentication/security information is stored separately from an ESSID, and authentication information used in wireless LAN connection of each access point (AP) is managed separately as common authentication information. When wireless LAN connection is performed, an authentication trial is performed repeatedly vis-à-vis a connectable wireless LAN service based on the common authentication information until connection is possible. By this means, a user can receive a desired wireless LAN service without being aware of a wireless LAN service identifier (ESSID).

Next, the operation of each section of control section 110 will be described.

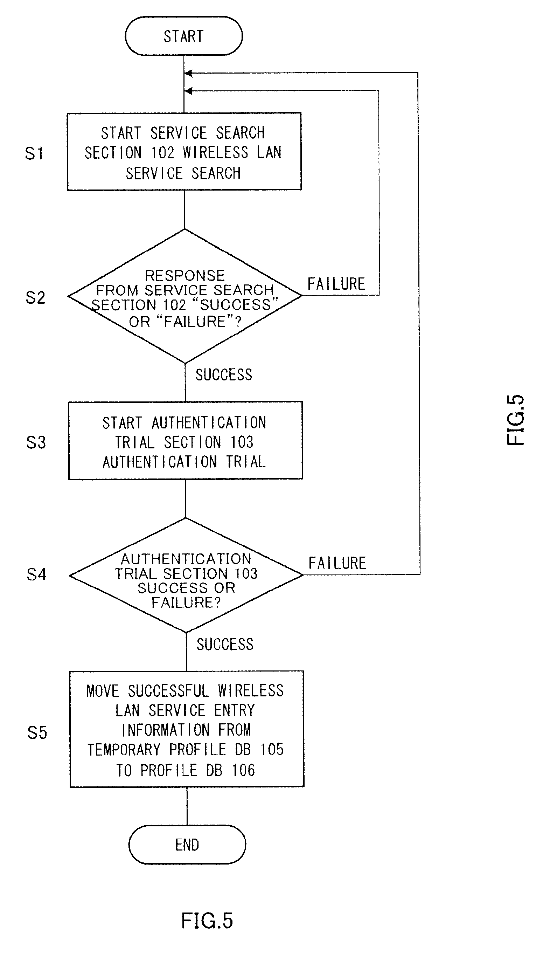

FIG.5 is a flowchart showing connection management processing performed by connection management section 101. In FIG.5, "S" indicates a step of the flow. Flowcharts described herein including this flow are executed by a CPU configuring control section 110.

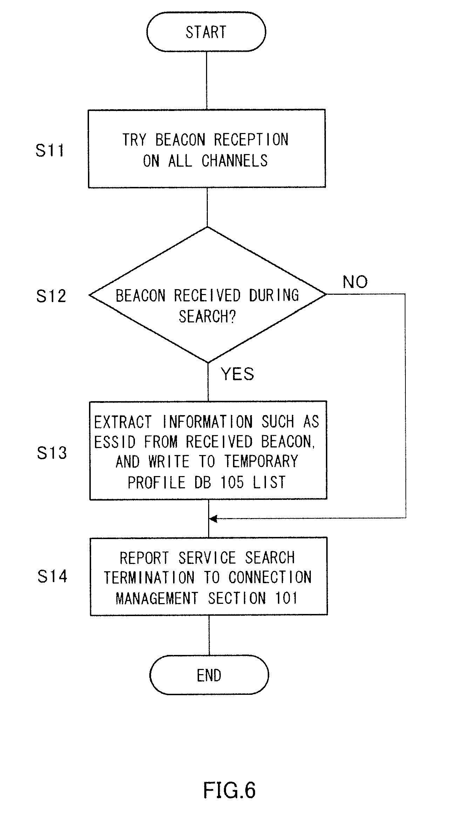

In step S1, connection management section 101 starts a wireless LAN service search by service search section 102 by means of a directive from the user. Details of search processing performed by service search section 102 will be given later herein with reference to FIG.6.

In step S2, connection management section 101 determines whether a response from service search section 102 is "success" or "failure". If the response from service search section 102 is "success", the processing flow proceeds to step S3, whereas if the response from service search section 102 is "failure", the processing flow returns to step S1 and the wireless LAN service search is continued.

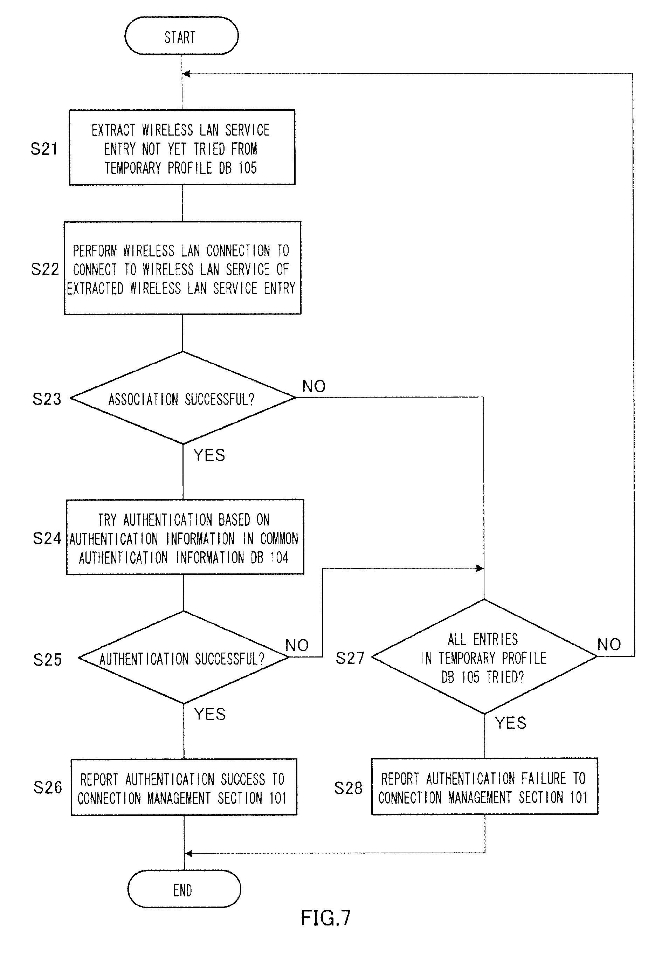

In step S3, connection management section 101 starts an authentication trial by authentication trial section 103. In accordance with a directive from connection management section 101, authentication trial section 103 tries authentication based on temporary profile information 300 and common authentication information 200. Details of authentication trial processing performed by authentication trial section 103 will be given later herein with reference to FIG.7.

In step S4, it is determined whether the authentication trial by authentication trial section 103 has succeeded or failed. If the authentication trial by authentication trial section 103 has succeeded, the processing flow proceeds to step S5, whereas if the authentication trial by authentication trial section 103 has failed, the processing flow returns to step S1 and the wireless LAN service search is continued.

In step S5, successful wireless LAN service entry information is moved from temporary profile DB 105 to profile DB 106, and this flow is terminated. By this means, wireless LAN service identification information in temporary profile DB 105 is moved to profile DB 106, and stored in profile DB 106 as a profile of each wireless LAN service.

Here, the connection management section 101 start trigger in this flow need not necessarily be a directive from a user, but may also be a wireless LAN disconnection.

FIG.6 is a flowchart showing wireless LAN service search processing performed by service search section 102.

In step S11, service search section 102 tries beacon reception on all channels. Each access point (AP) emits a beacon periodically, and service search section 102 tries reception of a beacon emitted periodically from each access point (AP). In 802.1x, the beacon frame format is fixed. An identifier in this case is an access point (AP) MAC (Media Access Control) address or the like included in a beacon frame.

In step S12, it is determined whether or not a beacon has been received during the search, and if a beacon has been received the processing flow proceeds to step S13, whereas if a beacon has not been received the processing flow proceeds to step S14.

In step S13, service identification information such as an ESSID is extracted from the received beacon, and the extracted service identification information is written to a temporary profile DB 105 list. Temporary profile information 300 stored in temporary profile DB 105 is shown in above-described FIG.4.

In step S14, service search section 102 reports service search termination to connection management section 101, and terminates this flow. Service search termination may be performed when service identification information of a connectable wireless LAN service has been stored in temporary profile DB 105, or when it has not been possible to receive a beacon on all channels, and service search section 102 reports service search termination to connection management section 101 in either case.

FIG.7 is a flowchart showing authentication trial processing performed by authentication trial section 103.

In step S21, authentication trial section 103 extracts a wireless LAN service entry that has not yet been tried from temporary profile DB 105. Temporary profile information 300 stored in temporary profile DB 105 is shown in above-described FIG.4. As shown in FIG.4, temporary profile information 300 holds entry number 301, ESSID 302, channel 303, and radio wave condition 304. Authentication trial section 103 extracts a wireless LAN service entry that has not yet been tried from temporary profile DB 105: for example, ESSID: KTTI and channel: 4ch of entry number 2.

In step S22, wireless LAN connection is performed in order to connect to the wireless LAN service of the extracted wireless LAN service entry. In the above example, wireless LAN layer connection is made to the entry number 2 ESSID: KTTI/channel: 4ch wireless LAN service from temporary profile DB 105.

In step S23, it is determined whether or not an Association has succeeded, and if an Association has succeeded the processing flow proceeds to step S24, whereas if an Association has failed the processing flow proceeds to step S27.

In step S24, authentication trial section 103 tries authentication based on authentication information in common authentication information DB 104.

In step S25, authentication trial section 103 determines whether or not authentication has succeeded as a result of the authentication trial, and if authentication has succeeded the processing flow proceeds to step S26, whereas if authentication has failed the processing flow proceeds to step S27.

In step S26, authentication trial section 103 reports an authentication success to connection management section 101, and terminates this flow.

If an Association failed in above step S23, or if authentication failed in above step S27, it is determined whether or not all entries in temporary profile DB 105 h ave been tried in step S27. If all entries in temporary profile DB 105 have not been tried, the processing flow returns to above step S21, and an authentication trial is repeated until all entries have been tried or authentication succeeds.

If all entries in temporary profile DB 105 have been tried, in step S28 authentication trial section 103 reports authentication failure to connection management section 101 and terminates this flow.

Thus, after an Association has been completed, authentication trial section 103 tries authentication based on authentication information in common authentication information DB 104. When an authentication trial ends in failure, an authentication trial is repeated in the same way for another entry in temporary profile DB 105. If authentication trials for all entries in temporary profile DB 105 end in failure, authentication trial section 103 reports authentication failure to connection management section 101. If authentication succeeds, authentication trial section 103 reports the fact that authentication has succeeded to connection management section 101.

There are a number of methods relating to the connection order of temporary profile DB 105 entries. For example, methods include (1) performing connection in ascending channel order, and (2) performing connection in order starting from the access point with the highest radio field intensity. A further method is (3) to record connection information of an access point that has once been connected, and if an access point having that connection information is present in a temporary profile DB 105 entry, to prioritize an authentication trial for that entry.

Next, the overall operation of a wireless communication system having wireless terminal apparatus 100 will be described.

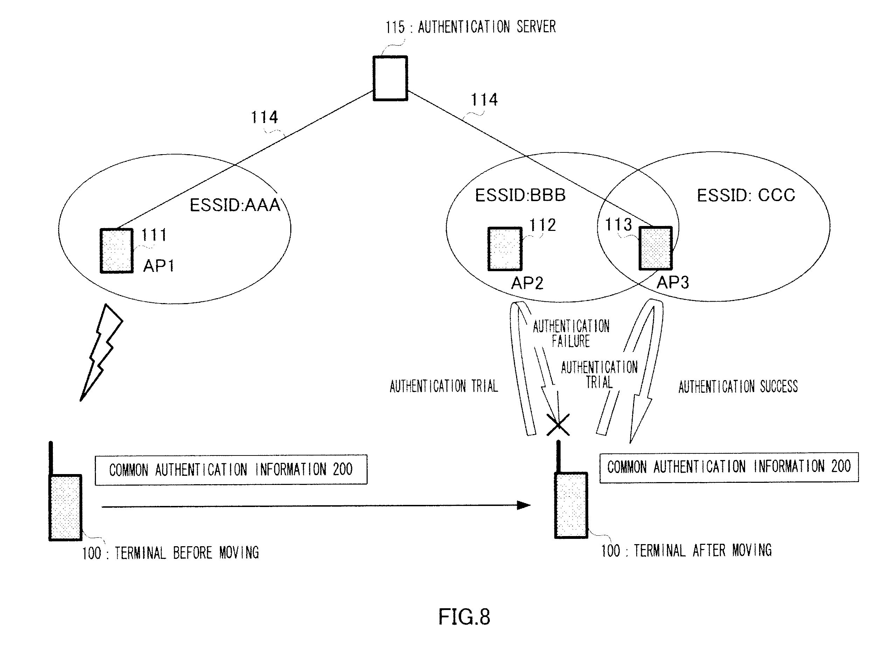

FIG.8 is a drawing showing the overall configuration of a wireless communication system having wireless terminal apparatus 100. FIG.8 is a drawing corresponding to FIG.1.

The wireless communication system in FIG.8 comprises wireless terminal apparatus 100, plurality of access points 111 through 113 (AP1 through AP3), wired LAN 114, and authentication server 115.

Wireless terminal apparatus 100 is equipped with WLAN section 107 (see FIG.2), receives beacons from access points 111 through 113 (AP1 through AP3) in the vicinity, connects to one of access points 111 through 113 (AP1 through AP3), and performs wireless communication. Wireless terminal apparatus 100 is also equipped with common authentication information DB 104 (see FIG.2) that stores common authentication information 200 (see FIG.3) used in common by plurality of access points 111 through 113 (AP1 through AP3).

Access points 111 through 113 (AP1 through AP3) are wireless relay apparatuses that connect wireless terminal apparatus 100 configuring a wireless LAN to wired LAN 114. Here, access points 111 through 113 (AP1 through AP3) are wireless LAN services. Access point 111 (AP1) is a wireless LAN service with an ESSID of AAA, access point 112 (AP2) is a wireless LAN service with an ESSID of BBB, and access point 113 (AP3) is a wireless LAN service with an ESSID of CCC.

When wireless terminal apparatus 100 accesses wired LAN 14 via access points 111 through 113 (AP1 through AP3), authentication server 115 performs authentication to confirm whether or not access is possible for wireless terminal apparatus 100.

In FIG.8, the wireless LAN service with an ESSID of AAA and the wireless LAN service with an ESSID of CCC provide a roaming service. In this case, a roaming service is provided by access point 111 (AP1) and access point 113 (AP3) a mong access points 111 through 113 (AP1 through AP3).

When wireless terminal apparatus 100 moves from an area in which access point 111 (AP1) provides a wireless LAN service to an area in which access point 112 (AP2) and access point 113 (AP3) provide wireless LAN services, wireless terminal apparatus 100 performs detection of access point 112 (AP2) and access point 113 (AP3). Specifically, service search section 102 of wireless terminal apparatus 100 searches for access point 112 (AP2) and access point 113 (AP3) by executing the above-described service search processing in FIG.6 in accordance with a connection management section 101 directive. On receiving a service search termination report, connection management section 101 issues an authentication trial directive to authentication trial section 103. Authentication trial section 103 of wireless terminal apparatus 100 performs an authentication trial. That is to say, authentication trial section 103 repeatedly performs authentication trials for all entries in temporary profile DB 105 based on common authentication information 200 stored in common authentication information DB 104 by executing the above-described authentication trial processing in FIG.7 until connection is possible. It is possible for wireless terminal apparatus 100 to perform authentication trials vis-à-vis all access points (APs) by performing authentication trials based on common authentication information 200.

Since access point 112 (AP2) shown in FIG.8 does not provide a roaming service, authentication ends in failure, but since access point 113 (AP3) provides a roaming service, connection can be performed. Wireless terminal apparatus 100 can perform roaming connection to a wireless LAN service without making a setting in advance as to which wireless LAN service is to be connected, and without being aware of an ESSID.

In this case, wireless terminal apparatus 100 does not need to manage an access point 113 (AP3) wireless LAN service identifier (ESSID or the like), but need only manage common authentication information 200.

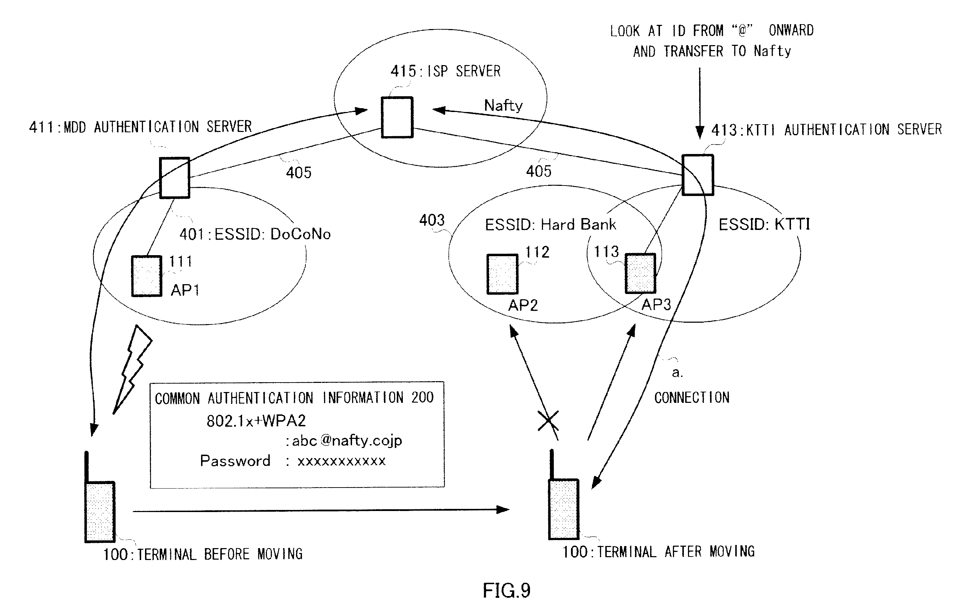

FIG.9 is a drawing showing an application example of a wireless communication system, this being an actual application example of the wireless communication system in FIG.8.

In FIG.9, access point 111 (AP1) is connected to MDD authentication server 411 via wired LAN 401, and access point 113 (AP3) is connected to KTTI authentication server 413 via wired LAN 403. Access point 112 (AP2) is not connected to an authentication server. MDD authentication server 411 and KTTI authentication server 413 are both connected to ISP (Internet Service Provider) server 415.

Access point 111 (AP1) is a wireless LAN service with an ESSID of DoCoNo, access point 112 (AP2) is a wireless LAN service with an ESSID of HardBank, and access point 113 (AP3) is a wireless LAN service with an ESSID of KTTI. Wireless terminal apparatus 100 stores common authentication information 200 having the contents below in common authentication information DB 104. In FIG.9, common authentication information 200 comprises the following: "802.1x+WPA2", ID: abc@nafty.co.jp, Password: xxxxxxxxxxx.

A case is shown by way of example in which operators MDD and KTTI mutually provide a roaming service via ISP server 415.

In FIG.9, the wireless LAN service with an ESSID of DoCoNo and the wireless LAN service with an ESSID of KTTI provide a roaming service. When wireless terminal apparatus 100 moves from an area in which AP1 provides a wireless LAN service to an area in which AP2 and AP3 provide wireless LAN services, wireless terminal apparatus 100 performs detection of AP2 and AP3, and performs an authentication trial based on stored common authentication information 200. Since AP2 does not provide a roaming service, authentication ends in failure, but since AP3 provides a roaming service, connection can be performed. In this case, the part of the common authentication information 200 ID from "@" onward is looked at, and transfer is performed to "nafty". By this means, after moving, wireless terminal apparatus 100 can be connected to a desired wireless LAN service without being aware of the ESSID of the roaming destination, as indicated by "a." in FIG.9.

As described in detail above, according to this embodiment, by storing common authentication information 200 that can be authenticated in common by plurality of access points 111 through 113 (AP1 through AP3) in common authentication information DB 104 in advance, and repeatedly performing an authentication trial v is-à-vis a connectable wireless LAN service based on common authentication information 200 until connection is possible when performing wireless LAN connection, wireless terminal apparatus 100 can receive a desired wireless LAN service without being aware of a wireless LAN service identifier (ESSID). The necessity for the terminal to recognize which access point it is necessary to be connected to in advance is eliminated.

In this way, release is provided from the cumbersome and complicated process of managing and setting an ESSID or suchlike access point identifier when different carriers provide services using the same authentication information as roaming services continue to expand.

Also, since there are no changes to existing access point settings, there is no need for the provision of new access points or the like, and the present invention offers the excellent feature of being able to be easily implemented without incurring a cost burden.

The above description illustrates a preferred embodiment of the present invention, but the scope of the present invention is not limited to this. For example, common authentication information 200 may be IEEE802.1x authentication information or WEB authentication information. Also, an ESSID has been described as service identification information by way of example, but it is only necessary for service identification information to be a network identifier in a wireless LAN, such as an SSID, which is an access point identifier, or a 48-bit numeric-value BSSID (Basic Service Set Identifier). A BSSID is the same as a MAC address. Generally, an ESSID can be set for a wireless LAN access point and terminals, and provision can be made for an access point to communicate only with a terminal whose ESSID matches. There is also a special "ANY" ESSID allowing connection to any access point. A function may also be provided to deny connection from a terminal with an "ANY" setting for reasons of security. As this embodiment requires no changes to existing access point settings, it is effective for access points with any kind of profile settings.

In this embodiment, the terms "wireless terminal apparatus" and "wireless connection method" have been used, but this is simply for convenience of description, and terms such as "wireless LAN terminal", "wireless communication system", "wireless LAN connection method", "roaming method", and the like may, of course, also be used.

The type, number, connection method, and so forth of parts - for example, DBs - configuring an above-described wireless terminal apparatus and wireless communication system are in no way restricted.

The above-described wireless connection method is implemented by a program for causing this wireless connection method to function. This program is stored in a computer-readable storage medium.

### Industrial Applicability

A wireless terminal apparatus and wireless connection method according to the present invention are useful for a mobile communication terminal performing wireless communication whereby network connection is performed via an access point. A wireless terminal apparatus and wireless connection method according to the present invention can be widely applied to readily portable electronic devices having a wireless communication function, such as notebook PCs and PDAs.

## Claims

1. A wireless terminal apparatus comprising:
a wireless communication section that performs wireless communication with a plurality of access points connected to a network;
a common authentication information storage section that stores common authentication information that can be authenticated by the plurality of access points in common;
a search section that performs a search of the access points by means of the wireless communication apparatus; and
an authentication trial section that performs an authentication trial vis-à-vis a connectable access point based on a search result of the search section and the common authentication information.

2. The wireless terminal apparatus according to claim 1, wherein the wireless communication section receives a beacon from the access point and performs communication with that access point.

3. The wireless terminal apparatus according to claim 1, wherein the common authentication information storage section divides wireless LAN setting information held by each access point into service identification information and authentication/security information, and stores the authentication/security information as the common authentication information.

4. The wireless terminal apparatus according to claim 1, wherein the search section extracts service identification information including an ESSID.

5. The wireless terminal apparatus according to claim 1, wherein the authentication trial section performs an authentication trial vis-à-vis all connectable access points.

6. The wireless terminal apparatus according to claim 1, further comprising a temporary profile storage section that temporarily stores service identification information of a connectable access point searched for by the search section as profile information,
wherein the authentication trial section performs an authentication trial vis-à-vis a connectable access point based on the profile information and the common authentication information.

7. A wireless connection method comprising:
a step of performing wireless communication with a plurality of access points connected to a network;
a step of storing common authentication information that can be authenticated by the plurality of access points in common;
a step of performing a search of the access points by means of the wireless communication;
a step of temporarily storing service identification information of the searched connectable access points as profile information; and
a step of performing an authentication trial vis-à-vis a connectable access point based on the profile information and the common authentication information.

8. A program for causing a computer to execute each step of a wireless connection method comprising:
a step of performing wireless communication with a plurality of access points connected to a network;
a step of storing common authentication information that can be authenticated by the plurality of access points in common;
a step of performing a search of the access points by means of the wireless communication;
a step of temporarily storing service identification information of the searched connectable access points as profile information; and
a step of performing an authentication trial vis-à-vis a connectable access point based on the profile information and the common authentication information.
